# EUROPEAN PATENT SPECIFICATION

(11) **EP 2 604 814 B1**
(45) Date of publication and mention of the grant of the patent: **29.08.2018**
(21) Application number: 12195794.8
(22) Date of filing: 06.12.2012
(51) Int. Cl.: F01K 7/32, F01K 25/06, F01K 25/10

(54) **Closed cycle system for recovering waste heat**
System mit geschlossenem Kreis zur Rückgewinnung von Abwärme
Système à cycle fermé pour récupérer la chaleur perdue

(30) Priority: 14.12.2011 IT CO20110063
(43) Date of publication of application: 19.06.2013
(73) Proprietor: Nuovo Pignone S.p.A., 50127 Florence (IT)
(72) Inventor: Mavuri, Rajesh, 560067 Karnataka (IN); Kosamana, Bhaskara, 560067 Karnataka (IN)
(74) Representative: Illingworth-Law, William Illingworth

(56) References cited:
- EP-A2- 2 410 153
- EP-A2- 2 557 279
- WO-A1-2007/131281
- WO-A1-2011/066089
- WO-A1-2013/070249
- WO-A2-2010/126980
- WO-A2-2012/074911
- US-A- 3 237 403
- US-A- 4 498 289
- US-A1- 2008 137 797

## Description

### BACKGROUND

### TECHNICAL FIELD

Embodiments of the subject matter disclosed herein generally relate to methods and systems and, more particularly, to processes and techniques for using a closed cycle system for waste heat recovery.

### DISCUSSION OF THE BACKGROUND

US 4 498 289 A discloses a carbondioxide power cycle in which a working fluid passes through a heat exchanger, expanded through a turbine and conducted through a loop in a bed of a burner.

WO 2013/070249 A1 discloses a thermodynamic cycle which instead of using a condenser, pumps a working fluid in multiple steps implementing intercoding stages between each step.

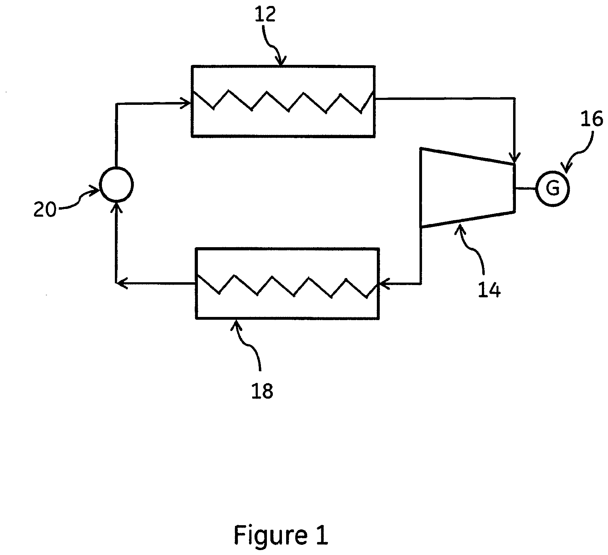

There are a wide variety of industrial and commercial processes that generate waste heat. The term "waste heat" refers to the residual heat given off by primary processes that is not conventionally exploited as a source of energy. Common sources of waste heat in an industrial operation include heat from space heating assemblies, boilers, engines and cooling systems. Bottoming heat cycles use waste heat from a heat source such as engine exhaust and convert that thermal energy into electricity. A typical Organic Rankine Cycle (ORC) used as a bottoming cycle is shown in Figure 1.

Figure 1 includes a heater/boiler 12 which receives waste heat from a heat source (e.g., gas turbine exhaust). The heated working fluid passes to the turbine 14 where it is converted to mechanical power to drive a generator 16. The resulting working fluid with lowered temperature and pressure then passes to a condenser 18 where it is converted to a liquid, which is then pumped by the pump 20 back to the heater/boiler 12. In such systems, a common working fluid is an organic fluid such as n-pentane. Such a cycle can accept waste heat at temperatures somewhat above the boiling point of the organic working fluid, and typically releases heat to the ambient air or water at a temperature somewhat below the boiling point of the organic working fluid.

One disadvantage of the ORC cycle is that most organic working fluids are highly flammable or hazardous. Additional safety measures are needed to avoid any leakage or direct contact of organic fluid with the heat source. It is customary to use an additional intermediate heat transfer medium such a closed diathermic oil loop between the heat source and organic fluid. This increases the cost and complexity of the system and reduces the efficiency. Also, the efficiency of an organic bottoming cycle is heavily dependent on the choice of organic fluid, which allows only a particular range of operating temperatures depending upon its chemical characteristics. Most existing ORC systems still operate at relatively low working fluid temperatures because of limitations in the chemical characteristics of fluid. For high-temperature applications, such as heat recovery from engine exhaust, the choices of working fluids are limited because of issues such as thermal stability and the auto-ignition temperatures of working fluid.

It would be desirable to have a simple system and method that efficiently recovers waste heat and overcomes the disadvantages mentioned above.

### SUMMARY

The present invention is defined in the accompanying claims.

According to one exemplary embodiment, there is a closed cycle system for waste heat recovery. The closed cycle system includes a heat exchanger configured to transfer heat from an external heat source to the working fluid, an expander fluidly connected to the heat exchanger configured to expand the working fluid and produce mechanical energy, a recuperator fluidly connected to the expander and configured to remove heat from the working fluid, a condensing unit fluidly connected to the recuperator and configured to condense the working fluid, and a pump fluidly connected to the condensing unit and configured to pump the condensed working fluid back to the recuperator. The path of the working fluid through the first exchanger, the expander, the recuperator, the condensing unit and the pump is closed. The condensing unit includes a multistage compressor configured to compress the working fluid, at least one cooler mechanism disposed upstream of the multistage compressor configured to cool the working fluid to achieve a predetermined temperature, and at least one cooler mechanism disposed downstream of the multistage compressor configured to condense the working fluid. There is at least one inter-cooler mechanism between adjacent stages of the multistage compressor configured to cool the working fluid between the adjacent stages to a predetermined temperature. According to yet another exemplary embodiment, there is a method for recovering waste heat that is part of a closed cycle system. The method includes transferring heat from an external heat source to a working fluid, expanding the heated working fluid for producing mechanical energy, cooling the expanded working fluid, condensing the cooled working fluid to change the working fluid to a liquid phase, pumping the condensed working fluid, and heating the pumped working fluid by means of transferring heat from the expanded working fluid. The step of condensing the working fluid further includes cooling the working fluid to a predetermined temperature, compressing the working fluid, and cooling the working fluid further to condense it.

### BRIEF DESCRIPTION OF THE DRAWINGS

The accompanying drawings, which are incorporated in and constitute a part of the specification, illustrate one or more embodiments and, together with the description, explain these embodiments. In the drawings:
Figure 1 is a schematic diagram of a generally known closed cycle organic Rankine system;
Figure 2 is a schematic diagram of a closed cycle system for waste heat recovery according to an exemplary embodiment;
Figure 3 is a schematic diagram of a typical integrally geared multistage compressor;
Figure 4 illustrates a pressure versus enthalpy phase diagram for a working fluid through the closed cycle system for waste heat recovery according to an exemplary embodiment;
Figure 5 is a schematic diagram of a closed cycle system for waste heat recovery illustrated with specific temperatures and pressures according to an exemplary embodiment;
Figure 6 is a schematic diagram of a closed cycle system for waste heat recovery using a refrigeration unit according to an exemplary embodiment;
Figure 7 illustrates a mechanical arrangement of the components of the closed cycle system for waste heat recovery according to an exemplary embodiment; and
Figure 8 is a flowchart illustrating a method for recovering waste heat according to an exemplary embodiment.

### DETAILED DESCRIPTION

The following description of the exemplary embodiments refers to the accompanying drawings. The same reference numbers in different drawings identify the same or similar elements. The following detailed description does not limit the invention. Instead, the scope of the invention is defined by the appended claims. The following embodiments are discussed, for simplicity, with regard to the terminology and structure of a system having an integrally geared multistage compressor, multistage radial (or axial) expander, and pump. However, the embodiments to be discussed next are not limited to these systems, but may be applied to other systems that use multistage compressors, expanders and pumps in a closed cycle.

Reference throughout the specification to "one embodiment" or "an embodiment" means that a particular feature, structure or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

In accordance with the embodiment discussed herein, a waste heat recovery system is disclosed. The exemplary waste heat recovery system utilizes heat sources to allow a higher efficiency recovery of waste heat for generation of electricity. The heat sources may include combustion engines, gas turbines, geothermal, solar thermal, industrial and residential heat sources, or the like.

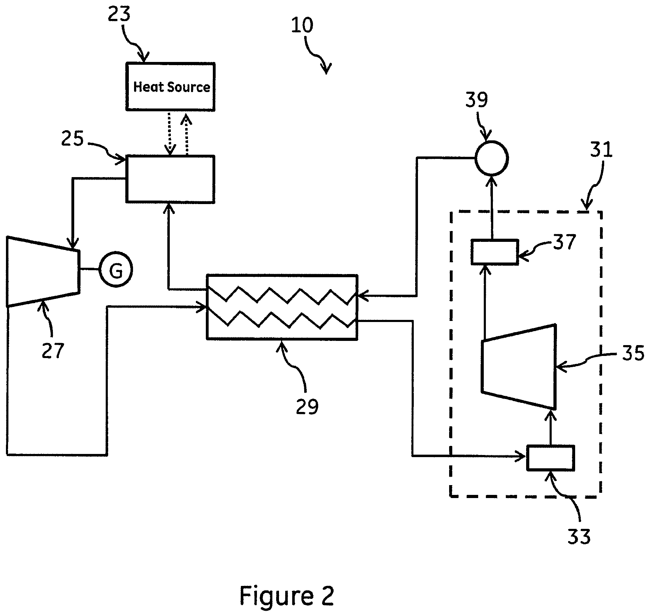

Referring to Figure 2, a closed cycle system 10 for waste heat recovery is illustrated in accordance with an exemplary embodiment of the present invention. The system 10 includes a heat exchanger 25, an expander 27, a recuperator 29, a condensing unit 31, and a pump 39 in serial flow relationship forming a closed loop. An external heat source 23 is in heat exchange relationship with the heat exchanger 25. Working fluid serially passes through the heat exchanger 25, the expander 27, the recuperator 29, the condensing unit 31, again to recuperator 29, and back to the heat exchanger 25. Thus, the working fluid follows a closed path and does not interact with the outside environment or any other fluid. The expander 27 may be a multistage expander and the pump 39 may be a multistage pump. The condensing unit 31 includes a multistage compressor 35 fluidly connected to a first cooler mechanism 33 and a second cooler mechanism 37. The first cooler mechanism 33 is located upstream of the multistage compressor and the second cooler mechanism 37 is located downstream of the multistage compressor. In one exemplary embodiment, the cooler mechanisms 33 and 37 may be a fin-and-tube or a shell-and-tube type of heat exchanger. Such heat exchanger may use air or water as a cooling medium.

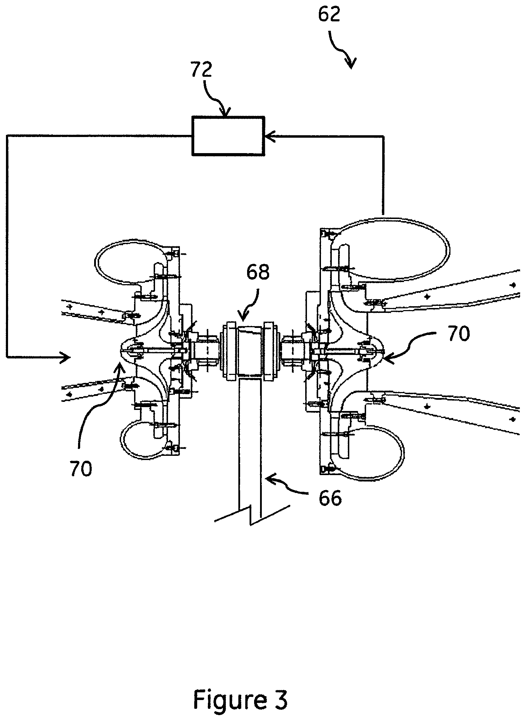

In one application, the multistage compressor is an integrally geared compressor. Integrally geared compressors (such as SRL compressors produced by Nuovo Pignone S.p.A., Florence, Italy) are used in several oil and gas applications, either for low-flow/high-pressure, or high-flow/low-pressure conditions. This type of compressor, which is illustrated in Figure 3, has a bull gear 66 and from one to four high-speed pinions 68. One or two impellers 70 can be mounted on each pinion shaft as shown in Figure 3. Inter-cooler mechanism 72 may be provided between the stages for cooling the working fluid when passing from one stage of the compressor to another stage of the compressor. In one exemplary embodiment, inter-cooler mechanism 72 may be a fin-and-tube or a shell-and-tube type of heat exchanger. Such heat exchanger may use air or water as a cooling medium.

Integrally geared compressors provide a possibility to have inter-cooling after each stage, which results in less absorbed power and increased overall efficiency. Also, it is possible to have guide vanes after each stage, thus increasing the operability range compared to the traditional single shaft multistage compressor.

Referring to Figure 2 again, a first cooler mechanism 33 is disposed upstream of the multistage compressor 35 and configured to cool the working fluid. The first cooler mechanism 33 in Figure 2 and the inter-cooler mechanism 72 in Figure 3 are configured to increase the density of working fluid and thus result in increasing the efficiency of compression. The second cooler mechanism 37 is disposed downstream of the multistage compressor 35 and configured to cool the working fluid to cause phase change of the working fluid from gas to liquid. In one exemplary embodiment, the cooler mechanisms 33 and 37 may be a fin-and-tube or a shell-and-tube type of heat exchanger. Such heat exchanger may use air or water as a cooling medium.

The working fluid may be CO₂ or any another non-flammable, non-toxic, non-corrosive fluid having a high molecular density and ability to withstand high temperatures (such as Nitrogen, or a mixture of CO₂ with other inert gases such as Helium). The closed cycle system for waste heat recovery in one exemplary embodiment of the present invention is a transcritical cycle. A transcritical cycle is a thermodynamic cycle in which the working fluid goes through both subcritical and supercritical states. A supercritical state refers to the state of fluid when its temperature and pressure both are above its critical point. The critical point is the highest temperature and pressure at which fluid can exist as a gas and liquid in equilibrium. In its supercritical state, fluid shows properties of both liquids and gases. The state of fluid below its critical point is referred to as subcritical.

In one exemplary embodiment, the working of system 10 can be described as follows: CO₂ is received in supercritical state in heat exchanger 25, wherein it receives heat from the external heat source 23. The heated CO₂ is circulated to the expander 27, wherein it gets cooled and drives the shaft of the expander 27 to produce mechanical energy. At this stage, the pressure of CO₂ falls below the critical point and, thus, CO₂ is in gaseous phase (subcritical state) at the outlet of the expander. The expander 27 may be connected to a power generation unit for producing electricity. The expander 27 may also be connected to other devices (e.g., a compressor or pump) for providing the necessary energy to activate them. The CO₂ vapor is passed to the recuperator 29, wherein it is cooled further and circulated to the condensing unit 31. In the condensing unit, CO₂ vapor is cooled by the first cooler mechanism 33 and then circulated to the multistage compressor 35. The multistage compressor 35 compresses CO₂ vapor, circulating it to the second cooler mechanism 37. During compression CO₂ again enters into the supercritical state. Inter-cooler mechanism 72 may be provided between the stages for cooling CO₂ when passing from one stage of the compressor to another stage of the compressor. The second cooler mechanism 37 cools CO₂ converting it into liquid phase. Liquid CO₂ is passed to the pump 39. Liquid CO₂ is pumped and circulated by pump 39 to the recuperator 29. At the outlet of pump, CO₂ again enters into the supercritical state. CO₂ is heated in the recuperator 29 that uses the heat from the expanded CO₂. CO₂ in supercritical state is circulated back to the heat exchanger 25, completing the closed cycle.

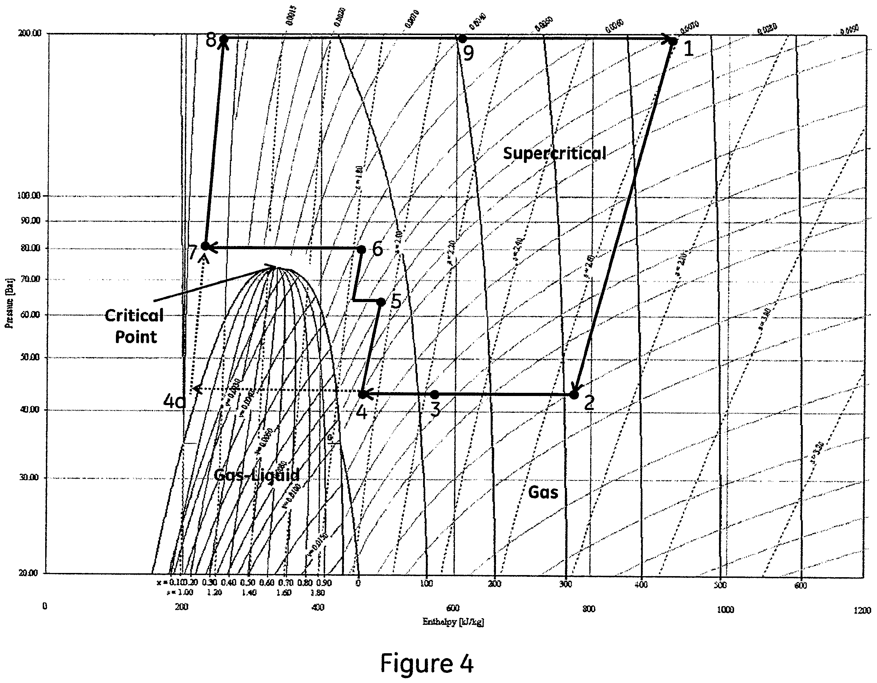

According to one exemplary embodiment, Figure 4 shows a P-H diagram (P indicates the pressure and H indicates the enthalpy of the working fluid at a certain point) for the working fluid (CO₂) of the closed cycle system 10. As previously discussed, those skilled in the art would appreciate that the thermodynamic transformations shown in Figure 4 are ideal and are meant to approximate the real transformations that take place in the real system 10. However, these ideal transformations are a good indicator of the characteristics of the real system.

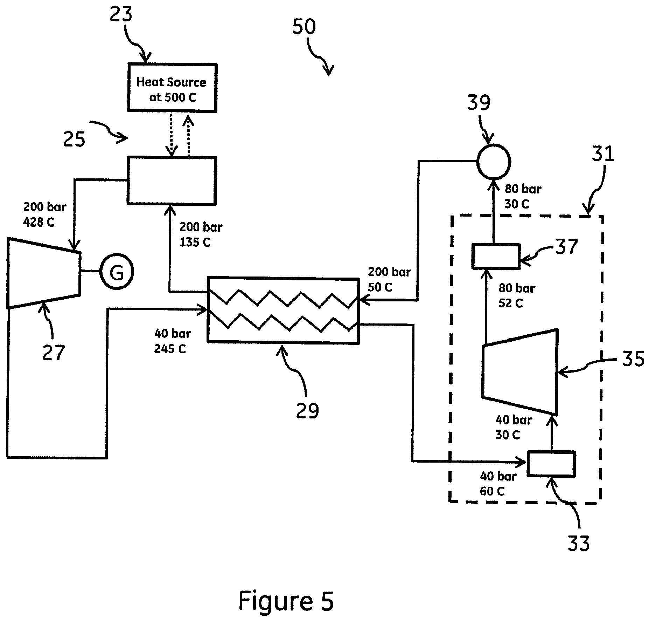

According to one exemplary embodiment, Figure 5 shows various points of Figure 4's P-H diagram at their physical locations in the closed cycle system 50. The waste heat source 23 (such as engine exhaust) can be considered at a temperature of about 500 °C. CO₂ in supercritical state enters heat exchanger 25 at a pressure of about 200 bar and temperature close to 135 °C (shown by point 9 in Figure 4). CO₂ gets heated in the heat exchanger 25 and reaches the temperature of about 428 °C. Thus CO₂ enters the expander 27 at a temperature of about 428 °C and pressure of about 200 bar (shown by point 1 in Figure 4), wherein it gets expanded rotating the shaft of the expander to produce mechanical energy. Here the pressure of CO₂ vapor drops to about 40 bar while temperature reduces to about 245 °C (shown by point 2) entering into the subcritical state. CO₂ vapor is then passed to recuperator 29, wherein its temperature drops to about 60 °C, pressure being the same (shown by point 3). CO₂ vapor then enters condensing unit 31. CO₂ vapor is cooled at first cooler mechanism 33, causing its temperature to drop to 30 °C (corresponding to point 4). CO₂ enters multistage compressor 35 at 30 °C and 40 bar, wherein it is compressed. Inter-cooler mechanism placed between the stages of compressor cool CO₂ further during compression to increase the efficiency of the system (shown by point 5). At the exit of the compressor, CO₂ gas is compressed to the pressure of 80 bar while its temperature is raised to 52 °C (shown by point 6), causing it to enter into supercritical state. CO₂ is then passed to second cooler mechanism 37, wherein it is cooled to a temperature of 30 °C at constant pressure. Here CO₂ is changed to a liquid phase. CO₂ in liquid phase is passed to pump 39 at a temperature of about 30 °C and pressure of about 80 bar (shown by point 7). CO₂ in liquid phase is pumped by pump 39 to raise the pressure to about 200 bar and temperature of about 50 °C (shown by point 8), entering again into supercritical state. CO₂ is then passed to recuperator 29, wherein it is heated and its temperature is raised to about 135 °C, pressure being the same (shown by point 9). CO₂ in supercritical state is then passed back to heat exchanger 23, completing the closed cycle.

Referring again to the P-H diagram of Figure 4, the dome-shaped curve indicates the vapor-liquid equilibrium curve (usually referred to as "vapor dome") for CO₂. The critical point for CO₂ is located at the peak of the dome. The region below this dome indicates the pressure and enthalpy points wherein gas and liquid can co-exist in equilibrium. The region above the vapor dome indicates the supercritical state of CO₂ whereas the region at the right side of dome below the critical zone indicates the gaseous state of CO₂. As it can be seen in the diagram, the thermodynamic cycle of the present invention is partially above the vapor dome (supercritical) and partially below the vapor dome (subcritical). It is noted that points 1, 6, 8 and 9 of Figure 4 indicate the supercritical state of CO₂, whereas points 2, 3, 4, and 5 correspond to the gaseous state of CO₂. Point 7 is close to the critical point at which the temperature of CO₂ is just below the critical temperature. At this point, CO₂ attains a dense phase which behaves substantially like a liquid although it may be a gas. Thus, it is desirable to use a pump to compress CO₂ at this step.

The novel embodiments, such as running a closed cycle system, using CO₂ as the working fluid, having inter-cooling in between the stages of multistage compressor, and having CO₂ in supercritical state through a portion of a closed cycle help to improve the efficiency of the whole cycle. According to an exemplary embodiment, all these features may be combined.

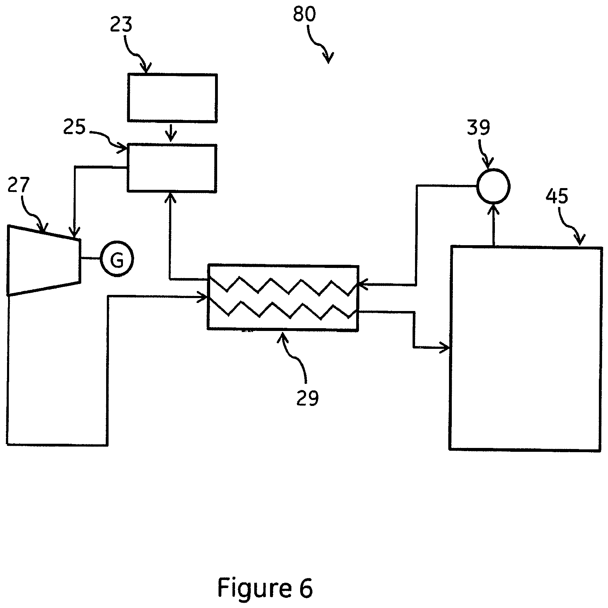

Figure 6 shows a closed cycle system 80 for waste heat recovery in accordance with an exemplary embodiment of the present invention. The system 80 includes an external heat source 23 in heat exchange relationship with a heat exchanger 25. Working fluid passes through a heat exchanger 25, an expander 27, a recuperator 29, a refrigeration unit 45, a pump 39, again through the recuperator 29, and goes back to the heat exchanger 25 to complete the closed cycle. The refrigeration unit 45 is configured to condense the working fluid, causing the phase change from gas to liquid. The refrigeration unit may be a standalone, electrically powered, ammonia-based industrial chiller unit. Such commercial refrigeration units are readily available on the market (e.g., industrial chiller units available from York International). The working of system 80 is the same as system 10 described in

Figure 2 with the only difference being that the condensing unit 31 is replaced by the refrigeration unit 45. The corresponding change in the thermodynamic cycle is shown by the dotted line in the P-H diagram of Figure 4. Point 4a in Figure 4 shows the beginning of the pumping phase when the refrigeration unit 45 is used as a condensing unit. The use of a refrigeration unit is required in very hot ambient conditions where it may be difficult to achieve condensation using cooler mechanism in conjunction with a multistage compressor as described in system 10 of the previous embodiment.

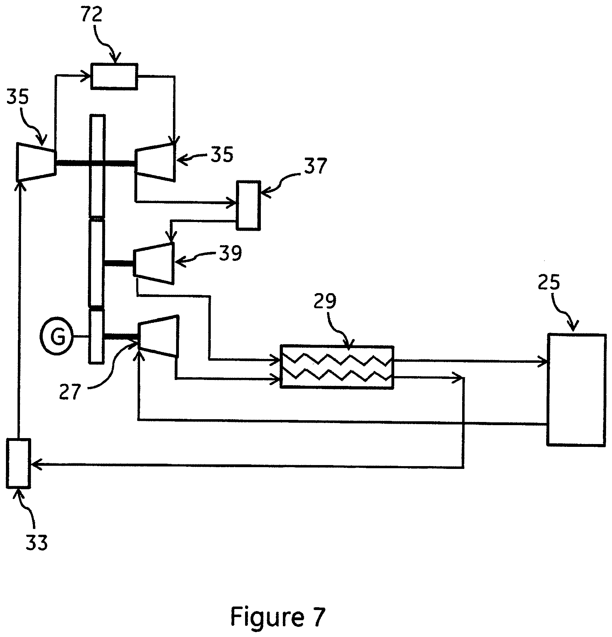

Figure 7 shows the mechanical arrangement of the components of the closed cycle system for waste heat recovery in accordance with an embodiment of the present invention. The expander 27, the multistage compressor 35 and the pump 39 are connected through an integrally geared system. All the turbomachinery components are arranged on both sides of a central gearbox as shown. This results in a compact arrangement, reducing the overall footprint of the integrally geared system.

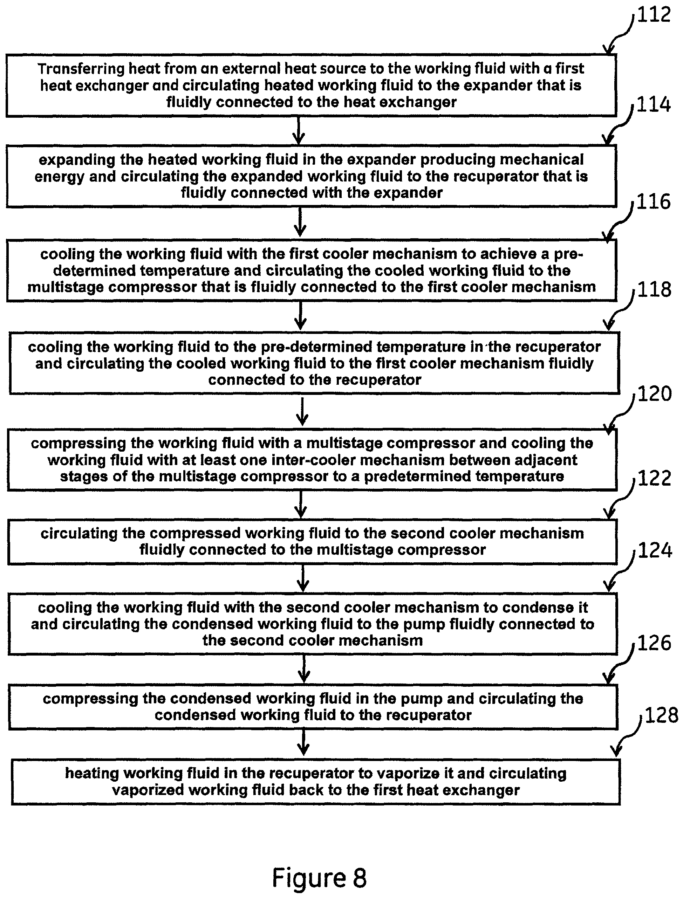

Next, a method for recovering waste heat using a closed cycle system is described in Figure 8. The method includes a step 112 of transferring heat from an external heat source to a working fluid, a step 114 of expanding the heated working fluid for producing to a working fluid, a step 114 of expanding the heated working fluid for producing mechanical energy, a step 116 of cooling the expanded working fluid, a step 118 of condensing the cooled working fluid to change the working fluid to a liquid phase, a step 120 of pumping the condensed working fluid, and a step 122 of heating the pumped working fluid by transferring heat from the expanded working fluid. The step 118 of condensing the working fluid includes cooling the working fluid to a predetermined temperature, compressing the working fluid, and cooling the working fluid further to condense it.

The disclosed exemplary embodiments provide a closed cycle system and a method for waste heat recovery. It should be understood that this description is not intended to limit the invention. On the contrary, the exemplary embodiments are intended to cover alternatives, modifications and equivalents, which are included in the scope of the invention as defined by the appended claims. Further, in the detailed description of the exemplary embodiments, numerous specific details are set forth in order to provide a comprehensive understanding of the claimed invention. However, one skilled in the art would understand that various embodiments may be practiced without such specific details.

Although the features and elements of the present exemplary embodiments are described in the embodiments in particular combinations, each feature or element can be used alone without the other features and elements of the embodiments or in various combinations with or without other features and elements disclosed herein. This written description uses examples of the subject matter disclosed to enable any person skilled in the art to practice the same, including making and using any devices or systems and performing any incorporated methods. The patentable scope of the subject matter is defined by the claims, and may include other examples that occur to those skilled in the art. Such other examples are intended to be within the scope of the claims.

## Claims

1. A closed cycle system (10) for waste heat recovery, the system comprising:
a heat exchanger (25) configured to transfer heat from an external heat source to a working fluid;
an expander (27) fluidly connected to an outlet of the heat exchanger and configured to expand the working fluid and produce mechanical energy;
a recuperator (29) fluidly connected to an outlet of the expander and configured to remove heat from the working fluid;
a condensing unit (31) fluidly connected to an outlet of the recuperator and configured to condense the working fluid, the condensing unit (31) including a first cooler mechanism (33) located upstream of a multistage compressor (35) with an inter-cooler mechanism and a second cooler mechanism (37) located downstream of the multistage compressor (35) such that the working fluid is arranged to enter into a supercritical state; and
a pump (39) fluidly connected to an outlet of the condensing unit and configured to pump the condensed working fluid back to the recuperator,
wherein the recuperator (29) is fluidly connected to the heat exchanger (25) such that the working fluid follows a closed path; and
wherein the expander (27), the multistage compressor (35) and the pump (39) are connected through an integrally geared system.

2. The system of claim 1, wherein the cooler mechanism further comprises:
the first cooler mechanism (33) configured to cool the working fluid to achieve a predetermined temperature; and
the second cooler mechanism (37) configured to cool and condense the working fluid.

3. The system of claim 1 or claim 2, wherein the multistage compressor (35) is an integrally geared compressor comprising at least one inter-cooler mechanism between adjacent stages.

4. The system of any preceding claim, wherein the condensing unit (31) is configured to change a state of the working fluid to a supercritical state.

5. The system of claim 4, wherein the change of state of the working fluid to the supercritical state occurs in the multistage compressor (35).

6. A method of waste heat recovery that is part of a closed cycle system, the method comprising:
transferring heat from an external heat source to a working fluid;
expanding by an expander (27) the heated working fluid for producing mechanical energy;
cooling the expanded working fluid;
condensing the cooled working fluid to change a phase of the working fluid to a liquid phase, the condensing unit (31) including a first cooler mechanism (33) located upstream of a multistage compressor (35) with an inter-cooler mechanism and a second cooler mechanism (37) located downstream of the multistage compressor (35) such that the working fluid is arranged to enter into a supercritical state;
pumping by a pump (39) the condensed working fluid; and
heating the pumped working fluid by transferring heat from the expanded working fluid;
wherein the expander (27), the multistage compressor (35) and the pump (39) are connected through an integrally geared system.

7. The method of claim 6, wherein the step of condensing the working fluid further comprises:
cooling the working fluid to a pre-determined temperature;
compressing the working fluid;
cooling the working fluid further to condense it.

8. A transcritical closed cycle system for waste heat recovery and configured to follow a phase curve plotted in a pressure versus enthalpy space, the system comprising:
a heat exchanger (25) configured to transfer heat from an external heat source to a working fluid;
an expander (27) fluidly connected to an outlet of the heat exchanger and configured to expand the working fluid and produce mechanical energy;
a recuperator (29) fluidly connected to an outlet of the expander and configured to remove heat from the working fluid;
a condensing unit (31) fluidly connected to an outlet of the recuperator and configured to condense the working fluid, the condensing unit (31) including a first cooler mechanism (33) located upstream of a multistage compressor (35) with an inter-cooler mechanism and a second cooler mechanism (37) located downstream of the multistage compressor (35) such that the working fluid is arranged to enter into a supercritical state; and
a pump (39) fluidly connected to an outlet of the condensing unit and configured to pump the condensed working fluid back to the recuperator,
wherein the recuperator (29) is fluidly connected to the heat exchanger (25) such that the working fluid follows a closed path,
wherein the expander (27), the multistage compressor (35) and the pump (39) are connected through an integrally geared system; and
wherein the phase curve plotted in a pressure versus enthalpy space includes a first part of the curve lying above the critical point of the working fluid,
a second part of the curve lies below the critical point of the working fluid and at the right side of a vapor dome of the working fluid, and
at least one point near the critical point of the working fluid.

## Patentansprüche

1. System mit geschlossenem Kreislauf (10) zur Rückgewinnung von Abwärme, wobei das System Folgendes umfasst:
einen Wärmetauscher (25), der konfiguriert ist, Wärme von einer externen Wärmequelle auf ein Arbeitsfluid zu übertragen;
einen Expander (27), der fluidisch mit einem Auslass des Wärmetauschers verbunden und konfiguriert ist, das Arbeitsfluid zu expandieren und mechanische Energie zu erzeugen;
einen Rekuperator (29), der fluidisch mit einem Auslass des Expanders verbunden und konfiguriert ist, Wärme aus dem Arbeitsfluid abzuleiten;
eine Kondensationseinheit (31), die fluidisch mit einem Auslass des Rekuperators verbunden und zum Kondensieren des Arbeitsfluids konfiguriert ist, wobei die Kondensationseinheit (31) einen ersten Kühlermechanismus (33), der stromaufwärts eines mehrstufigen Verdichters (35) mit einem Zwischenkühlermechanismus angeordnet ist, und einen zweiten Kühlermechanismus (37) aufweist, der stromabwärts des mehrstufigen Verdichters (35) angeordnet ist, sodass das Arbeitsfluid derart angeordnet ist, dass es in einen überkritischen Zustand eintritt; und
eine Pumpe (39), die fluidisch mit einem Auslass der Kondensationseinheit verbunden und konfiguriert ist, das kondensierte Arbeitsfluid zurück zum Rekuperator zu pumpen,
wobei der Rekuperator (29) fluidisch mit dem Wärmetauscher (25) verbunden ist, sodass das Arbeitsfluid einem geschlossenen Pfad folgt; und
wobei der Expander (27), der mehrstufige Verdichter (35) und die Pumpe (39) durch ein integral verzahntes System verbunden sind.

2. System nach Anspruch 1, wobei der Kühlermechanismus weiter Folgendes umfasst:
den ersten Kühlermechanismus (33), der konfiguriert ist, das Arbeitsfluid zu kühlen, um eine vorbestimmte Temperatur zu erreichen; und
den zweiten Kühlermechanismus (37), der konfiguriert ist, das Arbeitsfluid zu kühlen und zu kondensieren.

3. System nach Anspruch 1 oder 2, wobei der mehrstufige Verdichter (35) ein integral verzahnter Verdichter ist, der mindestens einen Zwischenkühlermechanismus zwischen benachbarten Stufen umfasst.

4. System nach einem der vorstehenden Ansprüche, wobei die Kondensationseinheit (31) konfiguriert ist, um einen Zustand des Arbeitsfluids in einen überkritischen Zustand zu ändern.

5. System nach Anspruch 4, wobei die Zustandsänderung des Arbeitsfluids in den überkritischen Zustand in dem mehrstufigen Verdichter (35) auftritt.

6. Verfahren zur Wiedergewinnung von Abwärme, die Teil eines Systems mit geschlossenem Kreislauf ist, wobei das Verfahren Folgendes umfasst:
Übertragen von Wärme von einer externen Wärmequelle auf ein Arbeitsfluid;
Expandieren (27) des erwärmten Arbeitsfluids zur Erzeugung von mechanischer Energie von einem Expander (27;
Abkühlen des expandierten Arbeitsfluids;
Kondensieren des abgekühlten Arbeitsfluids, um eine Phase des Arbeitsfluids in eine flüssige Phase zu wechseln, wobei die Kondensationseinheit (31) einen ersten Kühlermechanismus (33), der stromaufwärts eines mehrstufigen Verdichters (35) mit einem Zwischenkühlermechanismus angeordnet ist, und einen zweiten Kühlermechanismus (37) aufweist, der stromabwärts des mehrstufigen Verdichters (35) angeordnet ist, sodass das Arbeitsfluid derart angeordnet ist, dass es in einen überkritischen Zustand eintritt;
Pumpen des kondensierten Arbeitsfluids von einer Pumpe (39); und
Erwärmen des gepumpten Arbeitsfluids durch Übertragen von Wärme von dem expandierten Arbeitsfluid;
wobei der Expander (27), der mehrstufige Verdichter (35) und die Pumpe (39) durch ein integral verzahntes System verbunden sind.

7. Verfahren nach Anspruch 6, wobei der Schritt des Kondensierens des Arbeitsfluids weiter Folgendes umfasst:
Abkühlen des Arbeitsfluids auf eine vorbestimmte Temperatur;
Verdichten des Arbeitsfluids;
Abkühlen des Arbeitsfluids, um dieses weiter zu kondensieren.

8. Transkritisches System mit geschlossenem Kreislauf zur Rückgewinnung von Abwärme, das konfiguriert ist, einer Phasenkurve zu folgen, die in einem Druck-Enthalpie-Raum aufgetragen ist, wobei das System Folgendes umfasst:
einen Wärmetauscher (25), der konfiguriert ist, Wärme von einer externen Wärmequelle auf ein Arbeitsfluid zu übertragen;
einen Expander (27), die fluidisch mit einem Auslass des Wärmetauschers verbunden und konfiguriert ist, das Arbeitsfluid zu expandieren und mechanische Energie zu erzeugen;
einen Rekuperator (29), der fluidisch mit einem Auslass des Expanders verbunden und konfiguriert ist, Wärme aus dem Arbeitsfluid abzuleiten;
eine Kondensationseinheit (31), die fluidisch mit einem Auslass des Rekuperators verbunden und zum Kondensieren des Arbeitsfluids konfiguriert ist, wobei die Kondensationseinheit (31) einen ersten Kühlermechanismus (33), der stromaufwärts eines mehrstufigen Verdichters (35) mit einem Zwischenkühlermechanismus angeordnet ist, und einen zweiten Kühlermechanismus (37) aufweist, der stromabwärts des mehrstufigen Verdichters (35) angeordnet ist, sodass das Arbeitsfluid derart angeordnet ist, dass es in einen überkritischen Zustand eintritt; und
eine Pumpe (39), die fluidisch mit einem Auslass der Kondensationseinheit verbunden und konfiguriert ist, das kondensierte Arbeitsfluid zurück zum Rekuperator zu pumpen,
wobei der Rekuperator (29) fluidisch mit dem Wärmetauscher (25) verbunden ist, sodass das Arbeitsfluid einem geschlossenen Pfad folgt,
wobei der Expander (27), der mehrstufige Verdichter (35) und die Pumpe (39) durch ein integral verzahntes System verbunden sind; und
wobei die in einem Druck-Enthalpieraum aufgetragene Phasenkurve einen ersten Teil der Kurve umfasst, der über dem kritischen Punkt des Arbeitsfluids liegt,
ein zweiter Teil der Kurve unterhalb des kritischen Punktes des Arbeitsfluids und auf der rechten Seite einer Dampfkuppel des Arbeitsfluids liegt, und
mindestens einen Punkt nahe dem kritischen Punkt des Arbeitsfluids.

## Revendications

1. Système à circuit fermé (10) pour la récupération de chaleur perdue, le système comprenant :
un échangeur de chaleur (25) configuré pour transférer de la chaleur d'une source de chaleur externe à un fluide de travail ;
un détendeur (27) relié fluidiquement à une sortie de l'échangeur de chaleur et configuré pour détendre le fluide de travail et produire de l'énergie mécanique ;
un récupérateur (29) relié fluidiquement à une sortie du détendeur et configuré pour extraire de la chaleur du fluide de travail ;
une unité de condensation (31) reliée fluidiquement à une sortie du récupérateur et configurée pour condenser le fluide de travail, l'unité de condensation (31) comportant un premier mécanisme de refroidissement (33) situé en amont d'un compresseur multiétage (35) avec un mécanisme de refroidissement intermédiaire et un second mécanisme de refroidissement (37) situé en aval du compresseur multiétage (35) de sorte que le fluide de travail est amené à entrer dans un état supercritique ; et
une pompe (39) reliée fluidiquement à une sortie de l'unité de condensation et configurée pour renvoyer le fluide de travail condensé dans le récupérateur,
dans lequel le récupérateur (29) est relié fluidiquement à l'échangeur de chaleur (25) de sorte que le fluide de travail suit un parcours fermé ; et
dans lequel le détendeur (27), le compresseur multiétage (35) et la pompe (39) sont reliés au travers d'un système à engrenage intégré.

2. Système selon la revendication 1, dans lequel le mécanisme de refroidissement comprend en outre :
le premier mécanisme de refroidissement (33) configuré pour refroidir le fluide de travail pour obtenir une température prédéterminée ; et
le second mécanisme de refroidissement (37) configuré pour refroidir et condenser le fluide de travail.

3. Système selon la revendication 1 ou la revendication 2, dans lequel le compresseur multiétage (35) est un compresseur à engrenage intégré comprenant au moins un mécanisme de refroidissement intermédiaire entre deux étages adjacents

4. Système selon l'une quelconque des revendications précédentes, dans lequel l'unité de condensation (31) est configurée pour changer un état du fluide de travail en un état supercritique.

5. Système selon la revendication 4, dans lequel le changement d'état du fluide de travail en l'état supercritique se produit dans le compresseur multiétage (35).

6. Procédé de récupération de chaleur perdue qui fait partie d'un système à circuit fermé, le procédé comprenant :
le transfert de chaleur d'une source de chaleur externe à un fluide de travail ;
la détente par un détendeur (27) du fluide de travail chauffé pour produire de l'énergie mécanique ;
le refroidissement du fluide de travail détendu ;
la condensation du fluide de travail refroidi pour changer une phase du fluide de travail en une phase liquide, l'unité de condensation (31) comportant un premier mécanisme de refroidissement (33) situé en amont d'un compresseur multiétage (35) avec un mécanisme de refroidissement intermédiaire et un second mécanisme de refroidissement (37) situé en aval du compresseur multiétage (35) de sorte que le fluide de travail est amené à entrer dans un état supercritique ;
le pompage par une pompe (39) du fluide de travail condensé ; et
le chauffage du fluide de travail pompé par transfert de chaleur à partir du fluide de travail détendu ;
dans lequel le détendeur (27), le compresseur multiétage (35) et la pompe (39) sont reliés au travers d'un système à engrenage intégré.

7. Procédé selon la revendication 6, dans lequel l'étape de condensation du fluide de travail comprend en outre :
le refroidissement du fluide de travail jusqu'à une température prédéterminée ;
la compression du fluide de travail ;
la poursuite du refroidissement du fluide de travail pour le condenser.

8. Système transcritique à circuit fermé pour la récupération de chaleur perdue et configuré pour suivre une courbe de phase tracée dans un espace pression-enthalpie, le système comprenant :
un échangeur de chaleur (25) configuré pour transférer de la chaleur d'une source de chaleur externe à un fluide de travail ;
un détendeur (27) relié fluidiquement à une sortie de l'échangeur de chaleur et configuré pour détendre le fluide de travail et produire de l'énergie mécanique ;
un récupérateur (29) relié fluidiquement à une sortie du détendeur et configuré pour extraire de la chaleur du fluide de travail ;
une unité de condensation (31) reliée fluidiquement à une sortie du récupérateur et configurée pour condenser le fluide de travail, l'unité de condensation (31) comportant un premier mécanisme de refroidissement (33) situé en amont d'un compresseur multiétage (35) avec un mécanisme de refroidissement intermédiaire et un second mécanisme de refroidissement (37) situé en aval du compresseur multiétage (35) de sorte que le fluide de travail est amené à entrer dans un état supercritique ; et
une pompe (39) reliée fluidiquement à une sortie de l'unité de condensation et configurée pour renvoyer le fluide de travail condensé dans le récupérateur,
dans lequel le récupérateur (29) est relié fluidiquement à l'échangeur de chaleur (25) de sorte que le fluide de travail suit un parcours fermé,
dans lequel le détendeur (27), le compresseur multiétage (35) et la pompe (39) sont reliés au travers d'un système à engrenage intégré ; et
dans lequel la courbe de phase tracée dans un espace pression-enthalpie comporte une première partie de la courbe située au-dessus du point critique du fluide de travail,
une seconde partie de la courbe se trouve en dessous du point critique du fluide de travail et du côté droit d'un dôme de vapeur du fluide de travail, et
au moins un point près du point critique du fluide de travail.
